# EUROPEAN PATENT APPLICATION

(11) **EP 4 800 941 A1**
(43) Date of publication of application: **02.09.2026**
(21) Application number: 24890251.2
(22) Date of filing: 22.08.2024
(51) Int. Cl.: H04B 10/079, H04B 10/293

(54) **OPTICAL DETECTION CIRCUIT, WIRELESS COMMUNICATION BASE STATION AND SYSTEM, AND SIGNAL PROCESSING METHOD**

(30) Priority: 16.11.2023 CN 202311540603
(71) Applicant: Huawei Technologies Co., Ltd., Shenzhen, Guangdong 518129 (CN)
(72) Inventor: WANG, Tianxiang, Shenzhen, Guangdong 518129 (CN); ZOU, Lingxiu, Shenzhen, Guangdong 518129 (CN); YANG, Zhenxing, Shenzhen, Guangdong 518129 (CN); JI, Chunhui, Shenzhen, Guangdong 518129 (CN)
(74) Representative: MERH-IP Matias Erny Reichl Hoffmann Patentanwälte PartG mbB
(86) International application number: PCT/CN2024/114044
(87) International publication number: WO 2025/102889

(57) **Abstract**

Embodiments of this application relate to the field of wireless communication technologies, and provide a photodetection circuit, a wireless communication base station and system, and a signal processing method, to improve backoff efficiency of the photodetection circuit. The photodetection circuit includes a primary circuit and a secondary circuit. The primary circuit is turned on, while the secondary circuit is turned on under control of a power amplifier only when power is greater than a specified value. This can implement a transistor-like turn-on voltage effect, and improve output power of the photodetection circuit. In addition, an impedance modulation network is used to perform output load modulation on a photodetector in the primary circuit and a photodetector in the secondary circuit, to implement dynamic load conversion from a backoff point to a maximum output point. This helps the photodetector in the primary path and the photodetector in the secondary path maintain high output efficiency in an interval between a maximum power point and the backoff point, thereby improving backoff efficiency of the photodetection circuit.

## Description

This application claims priority to Chinese Patent Application No. 202311540603.6, filed with the China National Intellectual Property Administration on November 16, 2023 and entitled "PHOTODETECTION CIRCUIT, WIRELESS COMMUNICATION BASE STATION AND SYSTEM, AND SIGNAL PROCESSING METHOD", which is incorporated herein by reference in its entirety.

### TECHNICAL FIELD

This application relates to the field of wireless communication technologies, and in particular, to a photodetection circuit, a wireless communication base station and system, and a signal processing method.

### BACKGROUND

In the 5th generation (5th generation, 5G) communication system era, application of massive multiple-input multiple-output (massive multiple-input multiple-output, Massive MIMO) greatly improves a capacity and a peak value rate of wireless base stations. Compared with high-power outdoor macro base stations in 4th generation (4th generation, 4G) communication systems, 5G base stations with an active antenna unit (active antenna unit, AAU) architecture built on massive MIMO eliminate physical feeder ports, increase a quantity of channels, and provide higher antenna directional gains. As a result, for the same coverage, required single-channel radio frequency output power is reduced to be less than 10 W. With expansion of an operating frequency band of sub-6 GHz to a higher frequency band and further development of massive MIMO, a single AAU includes more channels, and the single-channel radio frequency output power is further reduced to a hundred-milliwatt level.

A radio frequency photonic base station is a wireless communication system that removes performance bottlenecks of pure electric systems by using photoelectric integration technologies, to implement ultra-wideband, miniaturization, and low power consumption. When the single-channel radio frequency output power is reduced to the hundred-milliwatt level, a solution in which a high-power photodiode (high-power photodiode, HPD) with a radio frequency photonic architecture directly drives antennas offers more advantages in sizes and power consumption over conventional power amplifiers (power amplifier, PA). This architecture simplifies radio frequency links and power supply, and can also implement an ultra-wideband radio frequency head end because of a high bandwidth feature of the HPD. However, backoff efficiency of HPDs has always been an important factor limiting their commercial use.

### SUMMARY

Embodiments of this application provide a photodetection circuit, a wireless communication base station and system, and a signal processing method, to improve backoff efficiency of the photodetection circuit.

To achieve the foregoing objective, the following technical solutions are used in this application.

According to a first aspect of embodiments of this application, a photodetection circuit is provided, including: an optical input end, a radio frequency output end, a first branch, a second branch, and an impedance modulation network. The optical input end is configured to input an optical signal, and the optical signal includes a first optical signal and a second optical signal. The first branch includes a first photodetector, and the first photodetector is configured to: receive the first optical signal and output a first radio frequency signal. The second branch includes a second photodetector and a first power amplifier. The second detector is configured to: receive the second optical signal and output a second radio frequency signal. The first power amplifier is coupled between the second photodetector and the impedance modulation network, and is configured to: amplify the second radio frequency signal and control connection and disconnection between the second photodetector and the impedance modulation network. The impedance modulation network is configured to: perform output impedance conversion on the first photodetector and the second photodetector, and couple an output end of the first photodetector and an output end of the second photodetector to the radio frequency output end.

According to the photodetection circuit provided in this embodiment of this application, the first photodetector and the second photodetector are connected in parallel, and whether the branch in which the second photodetector is located is turned on depends on whether the second radio frequency signal is greater than a threshold turn-on voltage of the first power amplifier PA 1. By using a circuit structure in which the branch in which the first photodetector is located remains steady on and the branch in which the second photodetector is located is turned on only when the second radio frequency signal reaches a specified peak value, a transistor-like turn-on voltage effect can be achieved, and output power of the photodetection circuit can be improved. In addition, the impedance modulation network is used to combine the branch in which the first photodetector is located and the branch in which the second photodetector is located, so that load modulation effect present when input power changes can be achieved, to implement dynamic load conversion from a backoff point to a maximum output point. This helps the first photodetector and the second photodetector maintain high output efficiency in an interval between the maximum power point and the backoff point, thereby improving backoff efficiency of the photodetection circuit.

In a possible implementation, the first power amplifier is specifically configured to: when the second radio frequency signal is less than a specified value, control the second photodetector to be disconnected from the impedance modulation network; when the second radio frequency signal is greater than or equal to a specified value, control the second photodetector to be connected to the impedance modulation network. In this way, when the branch in which the second photodetection is located is not connected (power of an input radio frequency signal is small), the photodetection circuit operates at an efficiency optimum point. When the branch in which the second photodetection is located is connected (power of an input radio frequency signal is high), the photodetection circuit operates at an output power optimum point.

In a possible implementation, the photodetection circuit further includes an optical attenuator, and the second optical signal is attenuated by the optical attenuator and then transmitted to the second photodetector. Power of the second optical signal is adjusted by using the optical attenuator, so that power of the first optical signal is greater than the power of the second optical signal, and an amplitude of the correspondingly output first radio frequency signal is greater than an amplitude of the second radio frequency signal. After the second radio frequency signal is amplified by the first power amplifier, an amplitude of a radio frequency signal output by the first branch may be equal to an amplitude of a radio frequency signal output by the second branch, to alleviate problems such as efficiency reduction and signal quality deterioration that are caused by amplitude inconsistency when two signals are combined, and precision of power adjustment of the optical attenuator on the optical signal is high.

In a possible implementation, the photodetection circuit further includes an electrical attenuator, and the electrical attenuator is coupled between the second photodetector and the first power amplifier. Power of the second radio frequency signal is adjusted by using the electrical attenuator, so that an amplitude of the first radio frequency signal can be greater than an amplitude of the second radio frequency signal. After the second radio frequency signal is amplified by the first power amplifier, an amplitude of a radio frequency signal output by the first branch may be equal to an amplitude of a radio frequency signal output by the second branch, to alleviate problems such as efficiency reduction and signal quality deterioration that are caused by amplitude inconsistency when two signals are combined, and integration difficulty of the electrical attenuator is low and costs are low.

In a possible implementation, the photodetection circuit further includes a first optical delayer, and the first optical signal is phase-shifted by the first optical delayer and then transmitted to the first photodetector. The first optical delayer is disposed before the first photodetector, and a phase of the first optical signal is adjusted in an optical adjustment manner, so that the photodetection circuit supports phase adjustment of a broadband signal, an optical delayer structure has high phase adjustment precision and a high bandwidth, and switching can be performed quickly.

In a possible implementation, the photodetection circuit further includes a second optical delayer, and the second optical signal is phase-shifted by the second optical delayer and then transmitted to the second photodetector. The second optical delayer is disposed before the second photodetector, and a phase of the second optical signal is adjusted in an optical adjustment manner, so that the photodetection circuit supports phase adjustment of a broadband signal, and an optical delayer structure has high phase adjustment precision and a high bandwidth, and supports fast multi-band true-delay switching.

In a possible implementation, the photodetection circuit further includes a first phase shifter, and the first phase shifter is coupled between the first photodetector and the impedance modulation network. The first phase shifter is disposed after the first photodetector, and a phase of the first radio frequency signal is adjusted in an electrical adjustment manner, so that the photodetection circuit supports phase adjustment of a broadband signal, and integration difficulty of the electrical phase shifter is low and costs are low.

In a possible implementation, the photodetection circuit further includes a second phase shifter, and the second phase shifter is coupled between the second photodetector and the first power amplifier. The second phase shifter is disposed after the second photodetector, and a phase of the second radio frequency signal is adjusted in an electrical adjustment manner, so that the photodetection circuit supports phase adjustment of a broadband signal, and integration difficulty of the electrical phase shifter is low and costs are low.

In a possible implementation, the photodetection circuit further includes a third photodetector and a second power amplifier. The third photodetector is configured to: receive a third optical signal and output a third radio frequency signal. The second power amplifier is coupled between the third photodetector and the impedance modulation network, and is configured to control connection and disconnection between the third photodetector and the impedance modulation network. A plurality of conditionally connected circuits are disposed in the photodetection circuit, so that a plurality of efficiency optimum points can be added to the photodetection circuit in a backoff interval, thereby improving average efficiency of the entire backoff interval. For example, the photodetection circuit has an efficiency optimum point when the first branch operates independently, has an efficiency optimum point when the first branch and the second branch operate synchronously, has an efficiency optimum point when the first branch and a third branch operate synchronously, and has an efficiency optimum point when the first branch, the second branch, and the third branch operate synchronously.

In a possible implementation, a turn-on voltage of the first power amplifier is not equal to a turn-on voltage of the second power amplifier. In this way, the branch in which the second photodetector is located and the branch in which the third photodetector is located provide different efficiency optimum points, thereby improving the average efficiency of the backoff interval.

In a possible implementation, the power of the first optical signal is equal to the power of the second optical signal. In this way, the first optical signal and the second optical signal may be generated by using a component with a mature technology, and no new component needs to be developed. This is easy to implement.

In a possible implementation, the power of the first optical signal is greater than the power of the second optical signal. In this way, the photodetection circuit may not need to include the foregoing power adjustment structure to increase power of the first radio frequency signal. Provided that the photodetection circuit includes a phase adjustment structure, the first branch and the second branch can output equal-amplitude in-phase radio frequency signals, thereby simplifying a structure of the photodetection circuit.

In a possible implementation, the photodetection circuit further includes an optical splitter, and the optical splitter is configured to: receive the optical signal and split the optical signal into the first optical signal and the second optical signal. In this case, the photodetection circuit includes only one optical input end, and the optical splitter implements power splitting of the optical signal and outputs the first optical signal and the second optical signal. Compared with that two independent optical input ends are required, a quantity of input interfaces of the photodetection circuit can be reduced, and power and efficiency can be improved without increasing costs and complexity of the photodetection circuit.

In a possible implementation, the photodetection circuit further includes an impedance matching network, and the impedance matching network is coupled between the second photodetector and the first power amplifier. The impedance matching network may match output impedance of the second photodetector with input impedance of the first power amplifier, to reduce an excessively large insertion loss caused by impedance mismatch when the second photodetector is cascaded with the first power amplifier.

In a possible implementation, the photodetection circuit further includes a first capacitor and a second capacitor, the first capacitor is coupled between the first photodetector and the impedance modulation network, and the second capacitor is coupled between the second photodetector and the first power amplifier. The first capacitor and the second capacitor may filter out a direct current signal, to filter out an interference signal.

According to a second aspect of embodiments of this application, a photoelectric conversion module is provided, including a photodetection circuit and an electro-optical conversion circuit. The photodetector is configured to convert a received optical signal into an electrical signal, the electro-optical conversion circuit is configured to convert a received electrical signal into an optical signal, and the photodetection circuit includes the photodetection circuit according to any one of the first aspect.

According to a third aspect of embodiments of this application, a photoelectric conversion chip is provided. The photoelectric conversion chip may be a die, or a photoelectric conversion chip may be a chip obtained by packaging a die, or the photoelectric conversion chip may be a chip system obtained by co-packaging a plurality of chips (dies or packaged chips). The photoelectric conversion chip includes a photodetection circuit and an electro-optical conversion circuit. The photodetector is configured to convert a received optical signal into an electrical signal, the electro-optical conversion circuit is configured to convert a received electrical signal into an optical signal, and the photodetection circuit includes the photodetection circuit according to any one of the implementations of the first aspect.

According to a fourth aspect of embodiments of this application, a wireless communication base station is provided, including a photoelectric conversion module and an antenna element. The photoelectric conversion module is coupled to the antenna element, and the photoelectric conversion module includes the photoelectric conversion module in the second aspect or the photoelectric conversion chip in the third aspect.

According to a fifth aspect of embodiments of this application, a wireless communication system is provided, including a baseband processing unit, a wireless communication base station, and an optical fiber. The baseband processing unit and the wireless communication base station are connected to each other through the optical fiber, and the wireless communication base station includes the wireless communication base station in the fourth aspect.

According to a sixth aspect of embodiments of this application, a signal processing method is provided, including: A first photodetector receives a first optical signal and performs optical-electro conversion on the first optical signal to generate a first radio frequency signal, and a second photodetector receives a second optical signal and performs optical-electro conversion on the second optical signal to generate a second radio frequency signal; a first power amplifier is turned on or turned off under control of the second radio frequency signal, and amplifies the second radio frequency signal when the first power amplifier is turned on; and an impedance modulation network performs output impedance conversion on the first photodetector and the second photodetector, and combines the first radio frequency signal and the amplified second radio frequency signal for output. Beneficial effects of the signal processing method provided in this embodiment of this application are the same as beneficial effects of the foregoing photodetection circuit. Details are not described herein again.

In a possible implementation, the first power amplifier is turned off when the second radio frequency signal is less than a specified value, or the first power amplifier is turned on when the second radio frequency signal is greater than or equal to a specified value. In this way, when the second radio frequency signal is small, the first photodetector may operate at an efficiency optimum point. When the second radio frequency signal is large, the first photodetector and the second photodetector operate at output power optimum points.

In a possible implementation, the signal processing method further includes: performing phase modulation on the first optical signal. This helps implement that the first radio frequency signal and the amplified second radio frequency signal are equal-amplitude in-phase radio frequency signals, to reduce a loss.

In a possible implementation, the signal processing method further includes: performing phase modulation and/or amplitude modulation on the second optical signal. This helps implement that the first radio frequency signal and the amplified second radio frequency signal are equal-amplitude in-phase radio frequency signals, to reduce a loss.

In a possible implementation, the signal processing method further includes: performing phase modulation on the first radio frequency signal. This helps implement that the first radio frequency signal and the amplified second radio frequency signal are equal-amplitude in-phase radio frequency signals, to reduce a loss.

In a possible implementation, the signal processing method further includes: performing phase modulation and/or amplitude modulation on the second radio frequency signal. This helps implement that the first radio frequency signal and the amplified second radio frequency signal are equal-amplitude in-phase radio frequency signals, to reduce a loss.

In a possible implementation, the signal processing method further includes: receiving an optical signal, and processing the optical signal to generate the first optical signal and the second optical signal. In this way, only one optical signal may be received, and an optical receiving path is simplified.

### BRIEF DESCRIPTION OF DRAWINGS

FIG. 1 is a diagram of an architecture of a wireless communication system according to an embodiment of this application;
FIG. 2 is a diagram of an architecture of a wireless communication base station according to an embodiment of this application;
FIG. 3 is a curve diagram of a relationship between power conversion efficiency and output power of a high-power photodiode according to an embodiment of this application;
FIG. 4 is a schematic of a topology structure of a balanced photodetector according to an embodiment of this application;
FIG. 5 is a schematic of a topology structure of a photodetection circuit according to an embodiment of this application;
FIG. 6 is a curve diagram showing efficiency varying with input power according to an embodiment of this application;
FIG. 7A and FIG. 7B are schematics of topology structures of a photodetection circuit according to an embodiment of this application;
FIG. 8A and FIG. 8B are schematics of topology structures of a photodetection circuit according to an embodiment of this application;
FIG. 9A and FIG. 9B are schematics of topology structures of a photodetection circuit according to an embodiment of this application;
FIG. 10A and FIG. 10B are schematics of topology structures of a photodetection circuit according to an embodiment of this application;
FIG. 11 is a schematic of a topology structure of a photodetection circuit according to an embodiment of this application;
FIG. 12A to FIG. 12C are schematics of topology structures of a photodetection circuit according to an embodiment of this application; and
FIG. 13 is a diagram of a structure of a first photodetector according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

The terms such as "first" and "second" below are only for ease of description, and cannot be understood as indicating or implying relative importance or implicitly indicating a quantity of indicated technical features. Therefore, a feature limited by "first", "second", or the like may explicitly or implicitly include one or more features. In the descriptions of this application, unless otherwise stated, "a plurality of" means two or more than two.

In addition, in embodiments of this application, orientation terms such as "upper", "lower", "left", and "right" may include but are not limited to definitions based on illustrated orientations in which components in the accompanying drawings are placed. It should be understood that, these directional terms may be relative concepts. The directional terms are used for relative description and clarification, and may vary accordingly depending on a change in the orientations in which the components in the accompanying drawings are placed in the accompanying drawings.

In embodiments of this application, unless otherwise clearly specified and limited, the term "connection" should be understood in a broad sense. For example, the "connection" may indicate a fixed connection, a detachable connection, or an integral connection; or may indicate direct interconnection, or indirect interconnection through an intermediate medium. In addition, the term "coupling" may indicate a direct electrical connection, or may indicate an indirect electrical connection through an intermediate medium. The term "contact" may indicate direct contact or indirect contact through an intermediate medium.

In embodiments of this application, "and/or" describes an association relationship between associated objects, and indicates that three relationships may exist. For example, A and/or B may indicate the following cases: Only A exists, both A and B exist, and only B exists, where A and B may be singular or plural. The character "/" usually indicates an "or" relationship between the associated objects.

A photodetection circuit provided in embodiments of this application may be used in a base station system, a satellite communication system, a radar system, an optical sensing system, and the like. For example, when the photodetection circuit is used in the base station system, the photodetection circuit may be a part of a circuit structure in a photoelectric conversion module of the base station, and is configured to implement photoelectric conversion of a signal in the base station. A specific application scenario of the photodetection circuit is not limited in embodiments of this application.

The following uses an example in which the photoelectric conversion module of the base station system is an application scenario for description. The photoelectric conversion module is a core component of a wireless communication system, and performance of the photoelectric conversion module directly affects a transmission distance and transmission quality of a signal. Therefore, indicators such as linearity and current efficiency need to be considered, to meet an application requirement of the base station system.

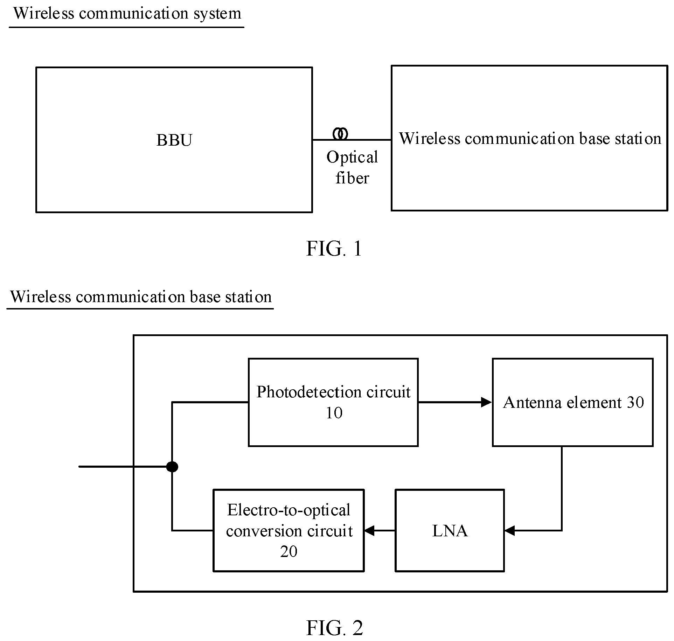

FIG. 1 is a diagram of an architecture of a wireless communication system according to an embodiment of this application.

An embodiment of this application provides a wireless communication system. As shown in FIG. 1, the wireless communication system includes a baseband unit (baseband unit, BBU), an optical fiber, and a wireless communication base station. A BBU is connected to the wireless communication base station through the optical fiber, and the optical fiber is configured to implement remote transmission of a radio frequency optical signal.

The BBU is mainly configured to process radio link control (Radio Link Control, RLC), media access control (Medium Access Control, MAC), some port physical layer (Port Physical Layer, PHY) functions, radio resource control (Radio Resource Control, RRC), and a packet data convergence protocol (Packet Data Convergence Protocol, PDCP). For example, the BBU is further configured to: receive a radio frequency signal, perform electro-optical conversion on the received radio frequency signal for transmission through the optical fiber.

The wireless communication base station is connected to the BBU. The wireless communication base station is mainly configured to: perform optical-electro conversion on a received optical-carrier radio frequency signal, perform transmission and radiation on a converted signal, and establish a downlink from the base station to a terminal device; and receive an uplink signal from the terminal device, perform transmission and electro-optical conversion on the uplink signal, and establish an uplink from the terminal device to the base station.

The base station may be a base transceiver station (base transceiver station, BTS) in a global system for mobile communications (global system for mobile communications, GSM) or a code division multiple access (code division multiple access, CDMA) network, or may be a 3G NodeB (NodeB) in a wideband code division multiple access (wideband code division multiple access, WCDMA) system, or may be an evolutional NodeB (which is briefly referred to as an eNB or an eNodeB) in a long term evolution (long term evolution, LTE) system.

FIG. 2 is a diagram of an architecture of a wireless communication base station according to an embodiment of this application.

Embodiments of this application provide the wireless communication base station. The wireless communication base station may be, for example, of a radio frequency photonic base station architecture based on an optical-carrier radio frequency remote technology. As shown in FIG. 2, the wireless communication base station includes a photodetection circuit 10, an electro-optical conversion circuit 20, a low noise amplifier (low noise amplifier, LNA), and an antenna element 30. The wireless communication base station provided in embodiments of this application simplifies, based on a conventional remote radio unit (remote radio unit, RRU) architecture, a remote RRU, and moves a digital signal processing unit, a digital-to-analog conversion unit, and the like to a BBU side under a tower.

The photodetection circuit 10 is mainly configured to implement efficient optical-electro conversion from an optical signal to an electrical signal on a transmit link. The electro-optical (electro-optical, EO) conversion circuit 20 is mainly configured to implement conversion from an electrical signal to an optical signal on a receive link. The electro-optical conversion circuit 20 may include, for example, a direct modulated laser or an external modulated laser. The LNA is mainly configured to implement low-noise amplification of a small signal received on a receive link. The antenna element 30 is mainly configured to implement functions such as isolation, bidirectional transmission, filtering, and radiation of uplink and downlink signals. The antenna element 30 is, for example, a filtering antenna element.

Certainly, the wireless communication base station may further include a structure such as a switch unit or a duplexer, configured to isolate the transmit link from the receive link, to ensure that both receiving and transmitting can function normally at the same time. A structure such as a switch unit or a duplexer may be disposed independently, or may be integrated into the antenna element 30.

In some embodiments, the photodetection circuit 10, the electro-optical conversion circuit 20, and the LNA may be integrated into a module, and are used in the wireless communication base station as a photoelectric conversion module provided in embodiments of this application. For example, the photodetection circuit 10, the electro-optical conversion circuit 20, and the LNA may exist in a form of components.

In some other embodiments, the photodetection circuit 10, the electro-optical conversion circuit 20, and the LNA may be integrated into a chip, and are used in the wireless communication base station as a photoelectric conversion chip provided in embodiments of this application.

The photoelectric conversion chip may be a die. For example, the photodetection circuit 10, the electro-optical conversion circuit 20, and the LNA are integrated into a same wafer. Alternatively, the photoelectric conversion chip may be a chip obtained by packaging a die.

Alternatively, the photoelectric conversion chip may be a chip obtained by co-packaging a plurality of chips (dies or packaged chips). In this case, the photoelectric conversion chip may also be understood as a photoelectric conversion chip system, and the chip system includes the plurality of chips that exist in a form of dies and/or packaged chips. For example, the photodetection circuit 10 and the electro-optical conversion circuit 20 are two independent chips, and are packaged with the LNA, to form the photoelectric conversion chip in this application. Certainly, the LNA may exist in a form of a component, or may exist in a form of a chip.

In some embodiments, a conventional PIN photodetector is used as the photodetection circuit 10. A conventional PIN photodetector based on a germanium material has a response speed of over 2 GHz, and becomes a prototype of a modern high-speed photodetector. With maturity of indium phosphide (InP) material system, a bandwidth of the conventional PIN photodetector is increased rapidly through continuous optimization of a material epitaxial structure and a component structure.

As a requirement for a response speed of the photodetector increases, a size of a component becomes smaller, and a current density in the component becomes higher, making the component more susceptible to space charge effect and heat effect. Collapse of an electric field in a depletion region causes a decrease in the bandwidth, and also causes saturation of microwave output power of the component. Saturation power of the photodetector affects a gain, a noise figure, and a dynamic range of a microwave photonic link. Therefore, when the conventional PIN photodetector maintains the bandwidth, the saturation power of the conventional PIN photodetector cannot meet a requirement for a high speed and high power.

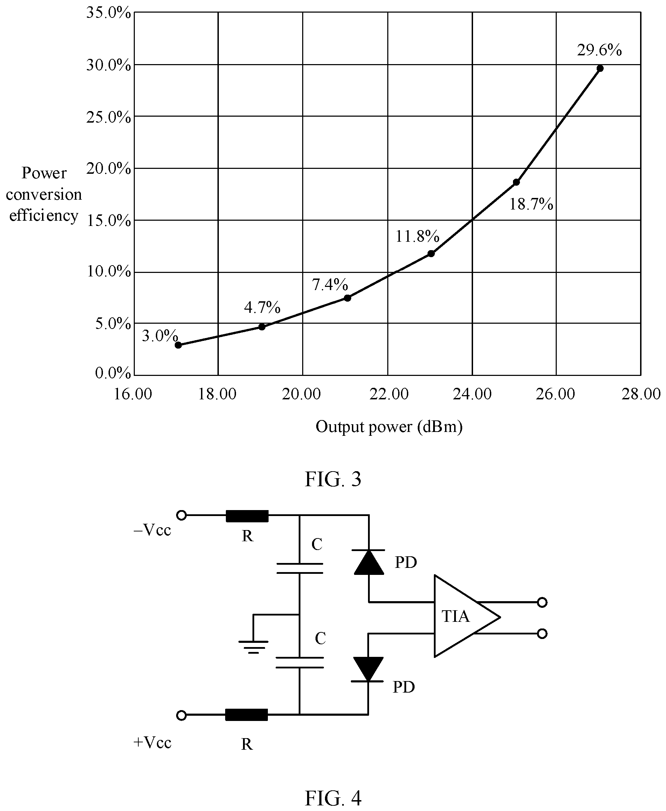

FIG. 3 is a curve diagram of a relationship between power conversion efficiency and output power of a high-power photodiode according to an embodiment of this application.

In some embodiments, a charge-compensated modified uni-traveling-carrier high-power photodiode (charge-compensated modified uni-traveling-carrier high-power photodiode, CC-MUTC-HPD) is used as a photodetection circuit 10. Currently, in a 10 GHz frequency band, when radio frequency output power of the CC-MUTC-HPD is 27.8 dBm, corresponding peak value efficiency can reach 50.7% to 60%.

In a scenario in which the high-power photodiode (high-power photodiode, HPD) directly drives an antenna element 30, radio frequency output power of the HPD is usually in a range of 20 dBm to 25 dBm, and a peak-to-average ratio of a modulated signal is usually approximately 8 dB to 10 dB. After backoff, efficiency of the HPD is greatly reduced. For example, FIG. 3 shows a change trend of power conversion efficiency (power conversion efficiency, PCE) with output power present when the output power of the HPD is in a range of 17 dBm to 27 dBm and a bias voltage remains unchanged. It can be learned that when the output power is close to saturation output power 27 dBm, the PCE of the HPD can reach 29.6%. However, when the signal is backed off by 8 dB, the PCE is only 4.7%.

In an application process, because the modulation signal has a large peak-to-average ratio, to satisfy linearity of a peak value, average output power of the HPD needs to be backed off by 6 dB to 10 dB based on the peak value. After the peak-to-average ratio is obtained by backing off the signal by 6 dB to 10 dB, it is difficult for the radio frequency output power of the HPD to reach 20 dBm. In this case, corresponding backoff efficiency is greatly reduced. However, to reduce power consumption of an RRU on a tower, on a premise that power backoff is required, the linearity of the peak value needs to be satisfied and the backoff efficiency of the HPD needs to be improved.

FIG. 4 is a schematic of a topology structure of a balanced photodetector according to an embodiment of this application.

In some embodiments, the balanced photodetector (balanced photodetector, BPD) is used as a photodetection circuit 10.

The BPD is widely used in space optical communication due to advantages of high sensitivity and low noise of the BPD. The BPD uses dual photodiodes to input an optical signal and suppress or eliminate common-mode noise in the signal, and is one of core components of coherent optical communication. Based on different chip connection structures, BPDs may be classified into a current self-reducing structure and a differential amplification structure. FIG. 4 shows a BPD with a differential amplification structure. The BPD includes a differential amplifier, two photodiodes (photodiodes, PDs), two capacitors C, and two resistors R. The differential amplifier is, for example, a trans-impedance amplifier (trans-impedance amplifier, TIA) with dual input ends. A resistor R, a capacitor C, and a PD form a current arm, and the TIA obtains a difference between currents of two arms and implements differential voltage output.

Based on different light coupling modes, BPDs with differential amplification structures can also be classified into an optical fiber coupling BPD and a spatial light coupling BPD. A BPD with a waveguide structure can resolve the conflict between optical absorption efficiency and a carrier transition time and can be easily integrated with other photonic elements monolithically. Although the BPD has the foregoing advantages, and can amplify a differential signal and improve sensitivity, a BPD with both high radio frequency power of a vertical-illumination structure and a high bandwidth of a waveguide structure has not been developed currently. A vertical-illumination BPD can implement high radio frequency power, but a bandwidth of the vertical-illumination BPD is not excessively large. However, a bandwidth of a waveguide-integrated BPD may be very large, but radio frequency power of the waveguide-integrated BPD cannot reach that of the vertical-illumination structure.

In view of this, although there are a plurality of structures of the photodetection circuit 10 currently, the structures all have shortcomings. Optimizing the structure of the photodetection circuit 10 is still a difficult problem that is studied by a person skilled in the art. Embodiments of this application are intended to provide an unbalanced photodetection circuit 10, to optimize backoff efficiency of the photodetection circuit 10.

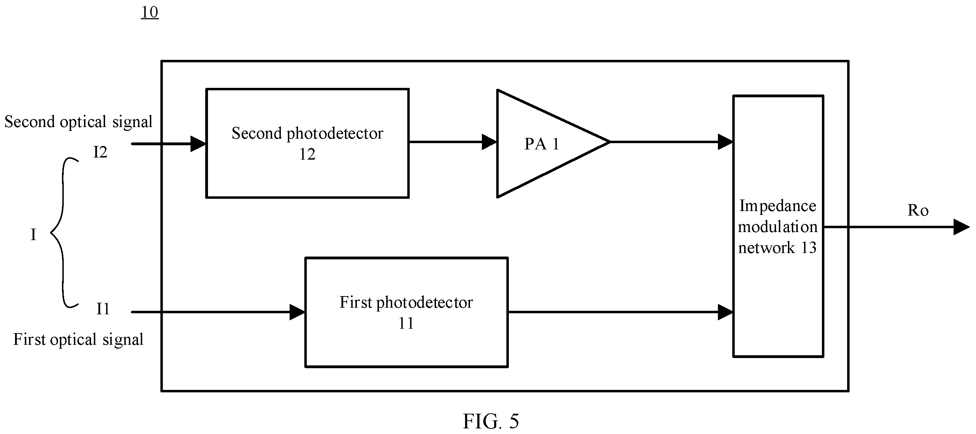

FIG. 5 is a schematic of a topology structure of a photodetection circuit according to an embodiment of this application.

Embodiments of this application provide a photodetection circuit 10. As shown in FIG. 5, the photodetection circuit 10 includes an optical input end I, a first branch, a second branch, an impedance modulation network 13, and a radio frequency output end Ro. The first branch and the second branch are parallel branches, and are combined at an input end of the impedance modulation network 13. An output end of the impedance modulation network 13 is coupled to the radio frequency output end Ro. Radio frequency signals output by the first branch and the second branch are combined into a final output radio frequency signal, and the final output radio frequency signal is output from the radio frequency output end Ro. The radio frequency output end Ro is configured to be coupled to a load, and the load may include, for example, a resistor, a capacitor, an inductor, or an antenna element 30.

The optical input end I is configured to input an optical signal, and the optical signal includes a first optical signal and a second optical signal. For example, as shown in FIG. 5, the optical input end I includes a first optical input end I1 and a second optical input end I2, the first optical input end I1 is configured to input the first optical signal, and the second optical input end I2 is configured to input the second optical signal.

The first branch includes a first photodetector 11, and the first photodetector 11 is configured to: receive the first optical signal and output a first radio frequency signal. For example, the first photodetector 11 includes a first input end and a first output end. The first input end is configured to receive the first optical signal, and the first output end is configured to output the first radio frequency signal.

The second branch includes a second photodetector 12 and a first power amplifier PA 1. The second photodetector 12 is configured to: receive the second optical signal and output a second radio frequency signal. For example, the second photodetector 12 includes a second input end and a second output end. The second input end is configured to receive the second optical signal, and the second output end is configured to output the second radio frequency signal. The first power amplifier PA 1 is coupled between the second photodetector 12 and the impedance modulation network 13, and is configured to: amplify the second radio frequency signal and control connection and disconnection between the second photodetector 12 and the impedance modulation network 13. For example, the first power amplifier PA 1 includes a third input end and a third output end. The third input end is coupled to the second output end of the second photodetector 12, the third output end is connected to a fourth input end of the impedance modulation network 13, and the first power amplifier PA 1 further controls connection and disconnection between the second output end and the third input end on a basis of amplifying the second radio frequency signal.

In embodiments of this application, the first power amplifier PA 1 operates in a class-C amplifier state. A gate voltage of the first power amplifier PA 1 may be adjusted, so that the first power amplifier PA 1 is turned on when the second radio frequency signal is greater than a specific threshold, or is turned off when the second radio frequency signal is less than the threshold. Threshold turn-on effect of a phototransistor is implemented by using the second photodetector 12 to drive the first power amplifier PA 1.

The first optical signal and the second optical signal are two optical signals obtained by processing an input radio frequency signal. For example, the first optical signal and the second optical signal may be obtained through splitting, electro-optical conversion, amplification, and other processing on the input radio frequency signal. The first optical signal and the second optical signal may be optical signals with equal power, or the first optical signal and the second optical signal may be optical signals with unequal power. The first optical signal and the second optical signal may be optical signals with same phases, or the first optical signal and the second optical signal may be optical signals with different phases.

The impedance modulation network 13 is configured to: perform output impedance conversion on the first photodetector 11 and the second photodetector 12, and couple the output end of the first photodetector 11 and the output end of the second photodetector 12 to the radio frequency output end Ro. For example, the impedance modulation network 13 includes the fourth input end and a fourth output end. The first output end of the first photodetector 11 and the third output end of the first power amplifier PA 1 are coupled to the fourth input end, and the fourth output end is coupled to the radio frequency output end Ro. The impedance modulation network 13 is configured to adjust, based on power of the first optical signal and power of the second optical signal, impedance load presented by the first photodetector 11 and the second photodetector 12 at the output end.

The impedance modulation network 13 is, for example, of a microstrip structure. For example, the impedance modulation network 13 may be a quarter-wavelength impedance converter or the like.

For example, the first power amplifier PA 1 is configured to: when the second radio frequency signal (for example, an amplitude of the second radio frequency signal) is less than a specified value, control the second photodetector 12 to be disconnected from the impedance modulation network 13. For example, when a frequency of the second optical signal is low, power of the second radio frequency signal output by the second photodetector 12 is also low, the second radio frequency signal is insufficient for turning on the first power amplifier PA 1, and the first power amplifier PA 1 is turned off, so that the second photodetector 12 is disconnected from the impedance modulation network 13. The first branch includes the first photodetector 11, and the first branch is an always-on circuit. In this case, all impedance of the impedance modulation network 13 is used as output impedance of the first photodetector 11, and the impedance modulation network 13 is an equivalent load of the first branch. For example, the impedance of the impedance modulation network 13 is 100 ohms. In this case, the equivalent load of the first branch is increased to 100 ohms. In this scenario, a voltage of the first branch reaches saturation, the second branch is disconnected, and the photodetection circuit 10 operates at an efficiency optimum point.

The first power amplifier PA 1 is configured to: when the second radio frequency signal (for example, an amplitude of the second radio frequency signal) is greater than or equal to a specified value, control the second photodetector 12 to be connected to the impedance modulation network 13. For example, when a frequency of the second optical signal is high, power of the second radio frequency signal output by the second photodetector 12 is also high, the second radio frequency signal makes the first power amplifier PA 1 to be turned on, and the first power amplifier PA 1 is turned on, so that the second photodetector 12 is connected to the impedance modulation network 13. In this scenario, the first branch and the second branch are connected in parallel to the impedance modulation network 13, and the impedance modulation network 13 is a shared equivalent load of the first branch and the second branch. In this case, the equivalent load of the first branch is decreased. For example, the equivalent load of the first branch is gradually decreased from 100 ohms, and a current of the first branch is gradually increased. However, a load of the second branch is decreased from an open-circuit state, and a current of the second branch is also gradually increased. When strength of the second optical signal reaches a saturation output point (or a peak value operating point) of the second branch, the first branch and the second branch equally share the impedance of the impedance modulation network 13, so that the load of the first branch and the load of the second branch are both at maximum power output impedance. For example, the load of the first branch and the load of the second branch are both 50 ohms. In this case, the currents of the first branch and the second branch both reach a maximum value, and the currents of the first branch and the second branch are equal. When phases of the first branch and the second branch are equal, output power of the photodetection circuit 10 reaches a maximum.

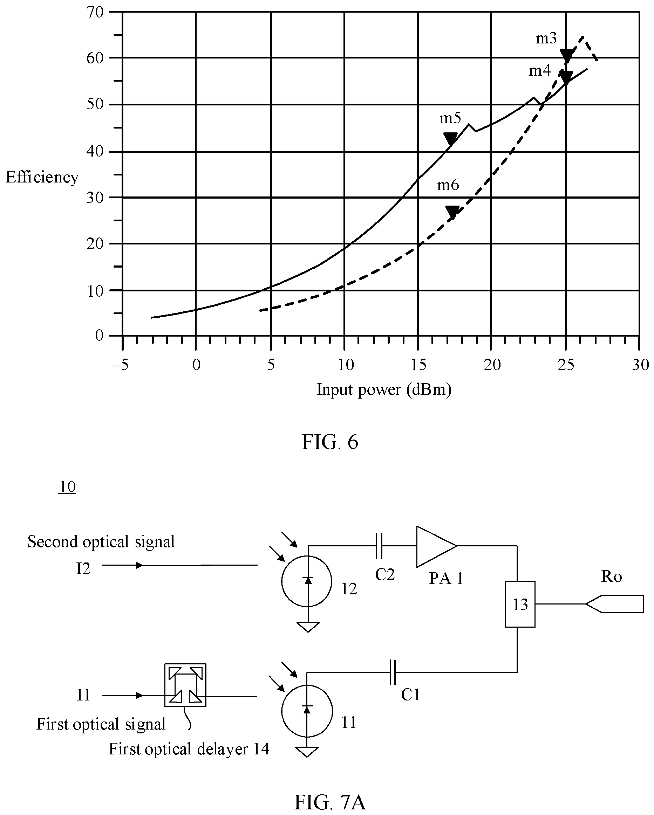

FIG. 6 is a curve diagram showing efficiency varying with input power according to an embodiment of this application.

A dashed line in FIG. 6 is a curve showing efficiency varying with input power of a photodetection circuit (a conventional photodetection circuit) that includes only a first photodetector 11. A solid line in FIG. 6 is a curve showing efficiency varying with the input power of the photodetection circuit 10 according to this application. In FIG. 6, a horizontal coordinate is input power, and a vertical coordinate is efficiency. It can be learned from FIG. 6 that, when the input power of the conventional photodetection circuit is 25 dBm, power conversion efficiency can reach approximately 59%, but when the input power is backed off to 17 dBm, backoff efficiency can only reach approximately 25%. However, when the input power of the photodetection circuit 10 provided in this embodiment of this application is 25 dBm, power conversion efficiency can reach approximately 54.5%; and when the input power is backed off to 17 dBm, backoff efficiency may reach approximately 41%.

According to the photodetection circuit 10 provided in this embodiment of this application, the first photodetector 11 and the second photodetector 12 are connected in parallel, and whether the branch in which the second photodetector 12 is located is connected depends on whether the second radio frequency signal is greater than a threshold turn-on voltage of the first power amplifier PA 1. By using a circuit structure in which the branch in which the first photodetector 11 is located remains on and the branch in which the second photodetector 12 is located is turned on only when the second radio frequency signal reaches a specified peak value, transistor-like turn-on voltage effect can be achieved, and the output power of the photodetection circuit 10 can be improved. In addition, the impedance modulation network 13 is used to combine the branch in which the first photodetector 11 is located and the branch in which the second photodetector 12 is located, so that load modulation effect present when the input power changes can be achieved, to implement dynamic load conversion from a backoff point to a maximum output point. This helps the first photodetector 11 and the second photodetector 12 maintain high output efficiency in an interval between the maximum power point and the backoff point, thereby improving the backoff efficiency of the photodetection circuit 10.

With regard to a manner of making the first branch and the second branch have same phases, in some embodiments, before the first optical signal and the second optical signal are input to the photodetection circuit 10, phases of the first optical signal and the second optical signal are adjusted. In this case, the first optical signal and the second optical signal that are received by the photodetection circuit 10 are optical signals with same phases.

In some other embodiments, the first optical signal and the second optical signal are optical signals with different phases, and a phase adjustment structure is disposed in the photodetection circuit 10, so that a phase of the first radio frequency signal and a phase of the second radio frequency signal that are finally output are the same.

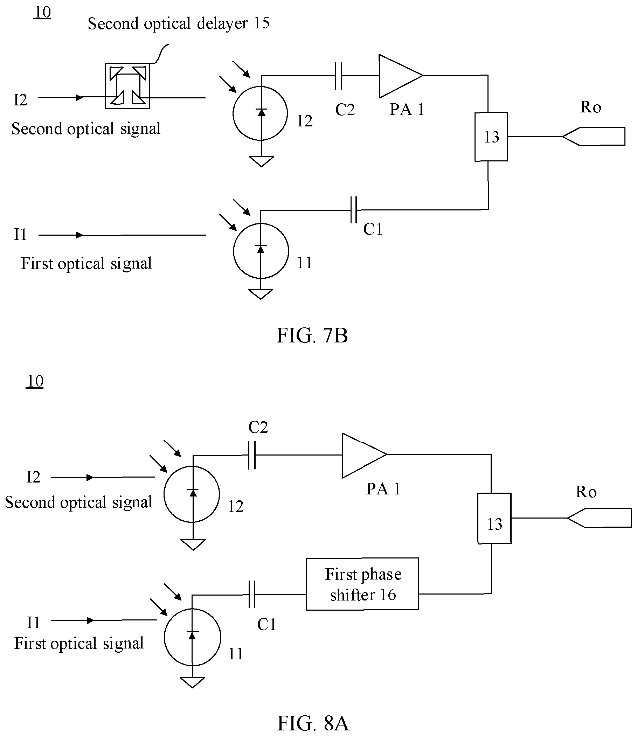

FIG. 7A and FIG. 7B are schematics of topology structures of the photodetection circuit according to an embodiment of this application.

In some embodiments, as shown in FIG. 7A, the photodetection circuit 10 further includes a first capacitor C1 and a second capacitor C2. The first capacitor C1 is coupled between the first photodetector 11 and the impedance modulation network 13, the second capacitor C2 is coupled between the second photodetector 12 and the first power amplifier PA 1, and the first capacitor C1 and the second capacitor C2 are configured to: pass an alternating current signal and filter out a direct current signal.

In some embodiments, as shown in FIG. 7A, the photodetection circuit 10 further includes a first optical delayer 14, and the first optical signal is phase-shifted by the first optical delayer 14 and then transmitted to the first photodetector 11.

The phase of the first optical signal is adjusted by using the first optical delayer 14, so that the first optical signal and the second optical signal are in-phase optical signals, and the first radio frequency signal and the second radio frequency signal that are correspondingly output are also in-phase radio frequency signals, to alleviate problems such as efficiency reduction and signal quality deterioration that are caused by phase inconsistency when two signals are combined.

In some other embodiments, as shown in FIG. 7B, the photodetection circuit 10 further includes a second optical delayer 15, and the second optical signal is phase-shifted by the second optical delayer 15 and then transmitted to the second photodetector 12.

The phase of the second optical signal is adjusted by using the second optical delayer 15, so that the first optical signal and the second optical signal are in-phase optical signals, and the first radio frequency signal and the second radio frequency signal that are correspondingly output are also in-phase radio frequency signals, to alleviate problems such as efficiency reduction and signal quality deterioration that are caused by phase inconsistency when two signals are combined.

In some other embodiments, the photodetection circuit 10 includes a first optical delayer 14 and a second optical delayer 15. The first optical delayer 14 adjusts the phase of the first optical signal, and the second optical delayer 15 synchronously adjusts the phase of the second optical signal, so that the first optical signal and the second optical signal are in-phase optical signals, and the first radio frequency signal and the second radio frequency signal that are correspondingly output are also in-phase radio frequency signals, to alleviate problems such as efficiency reduction and signal quality deterioration that are caused by phase inconsistency when two signals are combined.

According to the photodetection circuit 10 provided in this embodiment of this application, the optical delayer is disposed before the first photodetector 11 and/or the optical delayer is disposed before the second photodetector 12, and the phase of the first optical signal and/or the phase of the second optical signal are/is adjusted in an optical adjustment manner, so that the photodetection circuit 10 supports phase adjustment of a broadband signal, an optical delayer structure has high phase adjustment precision and a high bandwidth, and switching can be performed quickly.

The first optical delayer 14 and the second optical delayer 15 may be tunable optical delayers, or the first optical delayer 14 and the second optical delayer 15 may be non-tunable optical delayers. Structures of the first optical delayer 14 and the second optical delayer 15 are not limited in embodiments of this application. All optical delayers in related technologies are applicable to embodiments of this application.

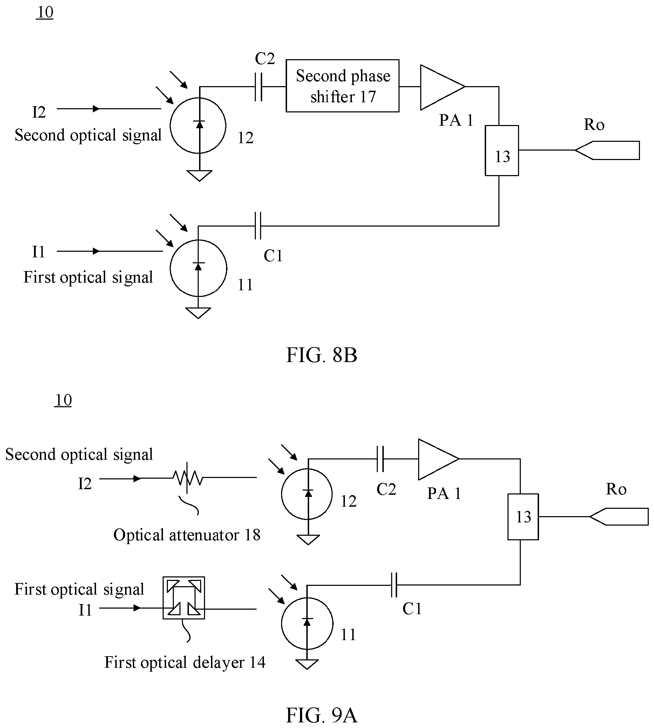

FIG. 8A and FIG. 8B are schematics of topology structures of the photodetection circuit according to an embodiment of this application.

In some embodiments, as shown in FIG. 8A, the photodetection circuit 10 further includes a first phase shifter 16, and the first phase shifter 16 is coupled between the first photodetector 11 and the impedance modulation network 13.

The phase of the first radio frequency signal is adjusted by using the first phase shifter 16, so that the first radio frequency signal and the second radio frequency signal can be in-phase radio frequency signals, to alleviate problems such as efficiency reduction and signal quality deterioration that are caused by phase inconsistency when two signals are combined.

In some other embodiments, as shown in FIG. 8B, the photodetection circuit 10 further includes a second phase shifter 17, and the second phase shifter 17 is coupled between the second photodetector 12 and the first power amplifier PA 1.

The phase of the second radio frequency signal is adjusted by using the second phase shifter 17, so that the first radio frequency signal and the second radio frequency signal can be in-phase radio frequency signals, to alleviate problems such as efficiency reduction and signal quality deterioration that are caused by phase inconsistency when two signals are combined.

In some other embodiments, the photodetection circuit 10 includes a first phase shifter 16 and a second phase shifter 17. The first phase shifter 16 adjusts the phase of the first radio frequency signal, and the second phase shifter 17 synchronously adjusts the phase of the second radio frequency signal, so that the first radio frequency signal and the second radio frequency signal are in-phase radio frequency signals, to alleviate problems such as efficiency reduction and signal quality deterioration that are caused by phase inconsistency when two signals are combined.

In the photodetection circuit 10 provided in embodiments of this application, the phase shifter is disposed after the first photodetector 11 and/or the phase shifter is disposed after second photodetector 12, and the phase of the first radio frequency signal and/or the phase of the second radio frequency signal are/is adjusted in an electrical adjustment manner, so that the photodetection circuit 10 supports phase adjustment of a broadband signal, and integration difficulty of the electrical phase shifter is low and costs are low.

The first phase shifter 16 and the second phase shifter 17 may be tunable phase shifters, or the first phase shifter 16 and the second phase shifter 17 may be non-tunable phase shifters. Structures of the first phase shifter 16 and the second phase shifter 17 are not limited in embodiments of this application. All phase shifters in related technologies are applicable to embodiments of this application.

In a first scenario, the power of the first optical signal is equal to the power of the second optical signal.

In this case, an amplitude of the first radio frequency signal is equal to the amplitude of the second radio frequency signal. However, an amplitude of the amplified radio frequency signal output after the second radio frequency signal is amplified by the first power amplifier PA 1 is different from the amplitude of the first radio frequency signal.

In a second scenario, the power of the first optical signal is less than the power of the second optical signal.

In this case, an amplitude of the first radio frequency signal is less than the amplitude of the second radio frequency signal, and an amplitude of the amplified radio frequency signal output after the second radio frequency signal is amplified by the first power amplifier PA 1 is greater than the amplitude of the first radio frequency signal.

In some embodiments, the photodetection circuit 10 further includes a power adjustment structure, configured to make the amplitude of the first radio frequency signal equal to the amplitude of the amplified radio frequency signal output by the first power amplifier PA 1.

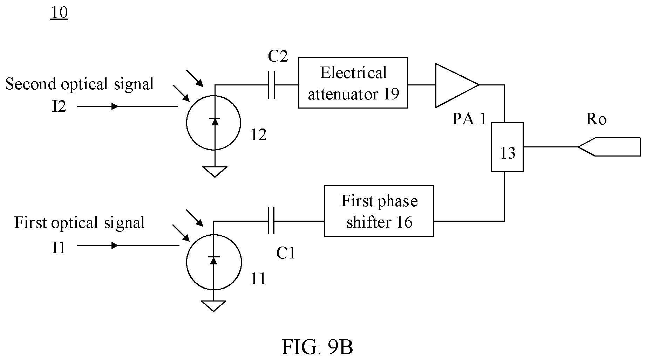

FIG. 9A and FIG. 9B are schematics of topology structures of the photodetection circuit according to an embodiment of this application.

In some embodiments, as shown in FIG. 9A, the photodetection circuit 10 further includes an optical attenuator 18, and the second optical signal is attenuated by the optical attenuator 18 and then transmitted to the second photodetector 12.

The power of the second optical signal is adjusted by using the optical attenuator 18, so that the power of the first optical signal is greater than the power of the second optical signal, and the amplitude of the correspondingly output first radio frequency signal is greater than the amplitude of the second radio frequency signal. After the second radio frequency signal is amplified by the first power amplifier PA 1, an amplitude of the radio frequency signal output by the first branch may be equal to an amplitude of the radio frequency signal output by the second branch, to alleviate problems such as efficiency reduction and signal quality deterioration that are caused by amplitude inconsistency when two signals are combined, and precision of power adjustment of the optical attenuator 18 on the optical signal is high.

The optical attenuator 18 may be a tunable optical attenuator, or the optical attenuator 18 may be a non-tunable optical attenuator. A structure of the optical attenuator 18 is not limited in embodiments of this application. All optical attenuators in related technologies are applicable to embodiments of this application.

In some other embodiments, as shown in FIG. 9B, the photodetection circuit 10 further includes an electrical attenuator 19, and the electrical attenuator 19 is coupled between the second photodetector 12 and the first power amplifier PA 1.

The power of the second radio frequency signal is adjusted by using the electrical attenuator 19, so that the amplitude of the first radio frequency signal can be greater than the amplitude of the second radio frequency signal. After the second radio frequency signal is amplified by the first power amplifier PA 1, an amplitude of the radio frequency signal output by the first branch may be equal to an amplitude of the radio frequency signal output by the second branch, to alleviate problems such as efficiency reduction and signal quality deterioration that are caused by amplitude inconsistency when two signals are combined, and integration difficulty of the electrical attenuator 19 is low and costs are low.

In some other embodiments, the photodetection circuit 10 includes an optical attenuator 18 and an electrical attenuator 19. The optical attenuator 18 adjusts the power of the second optical signal before the second photodetector 12, and the electrical attenuator 19 adjusts the power of the second radio frequency signal after the second photodetector 12. Finally, the first radio frequency signal and the amplified radio frequency signal may be equal-amplitude radio frequency signals, to reduce a loss.

In still some embodiments, the photodetection circuit 10 includes an optical intensifier and/or an electrical intensifier. The optical intensifier is disposed before the first photodetector 11, and the electrical intensifier is disposed after the first photodetector 11, to make an amplitude of the radio frequency signal output by the first branch equal to an amplitude of the radio frequency signal output by the second branch.

In a third scenario, the power of the first optical signal is greater than the power of the second optical signal.

In this case, an amplitude of the first radio frequency signal is greater than the amplitude of the second radio frequency signal, and an amplitude of the amplified radio frequency signal output after the second radio frequency signal is amplified by the first power amplifier PA 1 may be exactly equal to the amplitude of the first radio frequency signal. In this scenario, a power adjustment structure may not need to be disposed in the photodetection circuit 10, and the structure of the photodetection circuit 10 may be simplified.

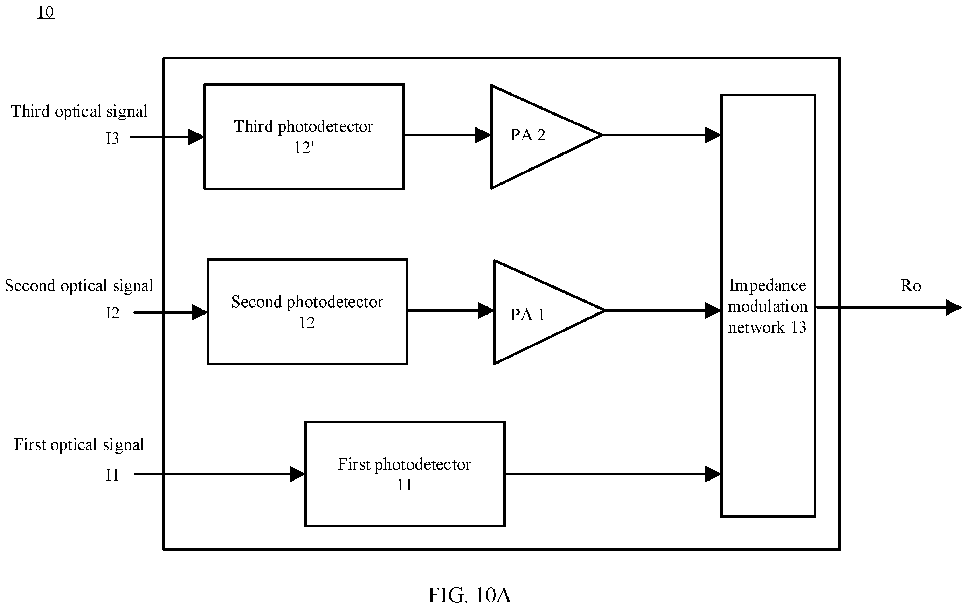

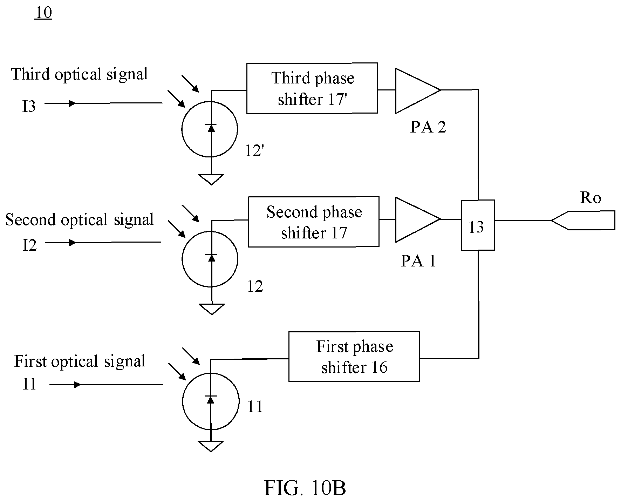

FIG. 10A and FIG. 10B are schematics of topology structures of the photodetection circuit according to an embodiment of this application.

In some embodiments, as shown in FIG. 10A, the photodetection circuit 10 further includes a third branch, and the third branch includes a third photodetector 12' and a second power amplifier PA 2.

The optical input end I further includes a third optical input end I3, and the third optical input end I3 is configured to input a third optical signal.

The third photodetector 12' is configured to: receive the third optical signal and output a third radio frequency signal. The second power amplifier PA 2 is coupled between the third photodetector 12' and the impedance modulation network 13, and is configured to control connection and disconnection between the third photodetector 12' and the impedance modulation network 13.

This is equivalent to that, on a basis of including the first branch and the second branch, the photodetection circuit 10 may further include one or more third branches, where both the third branch and the second branch are conditionally connected circuits. Phase matching and combination output of radio frequency signals output by the first branch, the second branch, and the third branch are completed by the impedance modulation network 13.

In some embodiments, the third branch may further include structures such as an optical delayer, a phase shifter, an optical attenuator, and an electrical attenuator. For a manner of disposing the foregoing structure in the third branch, refer to the foregoing descriptions of a structure in the second branch. Details are not described herein again.

For example, as shown in FIG. 10B, the first branch of the photodetection circuit 10 includes a first photodetector 11 and a first phase shifter 16, the second branch includes a second photodetector 12, a second phase shifter 17, and a first power amplifier PA 1, and the third branch includes the third photodetector 12', a third phase shifter 17', and the second power amplifier PA 2, an output end of the first phase shifter 16, an output end of the first power amplifier PA 1, and an output end of the second power amplifier PA 2 are combined at the input end of the impedance modulation network 13.

A plurality of conditionally connected circuits are disposed in the photodetection circuit 10, so that a plurality of efficiency optimum points can be added to the photodetection circuit 10 in a backoff interval, thereby improving average efficiency of the entire backoff interval. For example, the photodetection circuit 10 has an efficiency optimum point when the first branch operates independently, has an efficiency optimum point when the first branch and the second branch operate synchronously, has an efficiency optimum point when the first branch and the third branch operate synchronously, and has an efficiency optimum point when the first branch, the second branch, and the third branch operate synchronously.

In some embodiments, a turn-on voltage of the first power amplifier PA 1 is not equal to a turn-on voltage of the second power amplifier PA 2.

In this way, the branch in which the second photodetector 12 is located and the branch in which the third photodetector 12' is located provide different efficiency optimum points, thereby improving the average efficiency of the backoff interval.

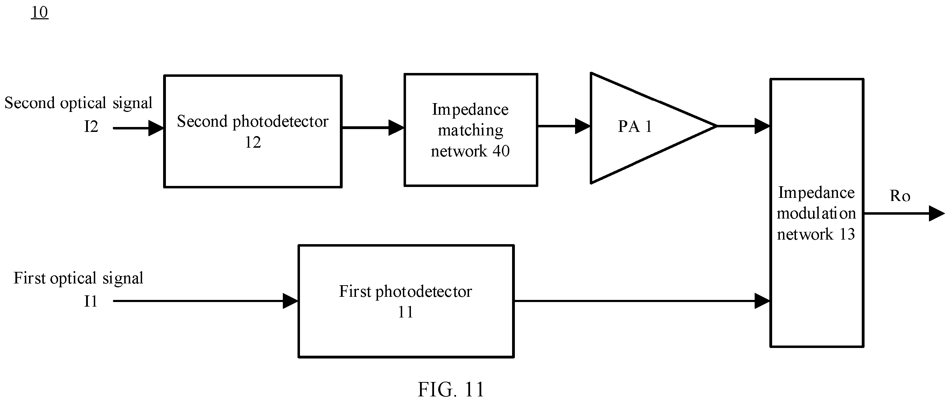

FIG. 11 is a schematic of a topology structure of the photodetection circuit according to an embodiment of this application.

In some embodiments, as shown in FIG. 11, the photodetection circuit 10 further includes an impedance matching network 40, and the impedance matching network 40 is coupled between the second photodetector 12 and the first power amplifier PA 1.

The impedance matching network 40 may be, for example, a quarter microstrip or a resistance-capacitor (RC) matching network. The impedance matching network 40 is configured to match output impedance of the second photodetector 12 with input impedance of the first power amplifier PA 1, to reduce an excessively large insertion loss caused by impedance mismatch when the second photodetector 12 is cascaded with the first power amplifier PA 1.

Based on the photodetection circuit 10 shown in FIG. 5 to FIG. 11, when the photodetection circuit 10 is configured to receive the first optical signal and the second optical signal, the photodetection circuit 10 includes two optical input ends whose input ports are optical ports, and the optical input end may be, for example, a pigtail-type optical fiber port or a pluggable optical fiber port. The photodetection circuit 10 includes two unbalanced links, but unbalanced links are finally combined to the radio frequency output port Ro through the impedance modulation network 13. The radio frequency output port Ro is configured to output a radio frequency signal, and the radio frequency output port Ro may be connected to another circuit through a coaxial connector, pin welding, surface-mounted welding, or the like.

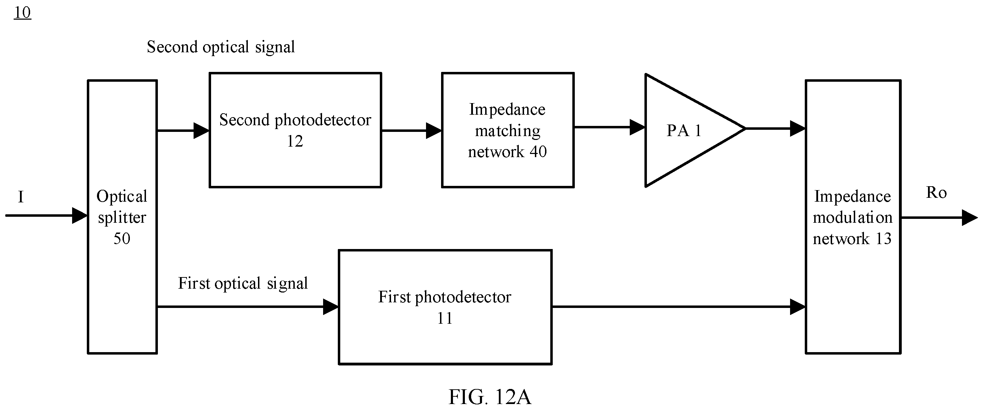

FIG. 12A to FIG. 12C are schematics of topology structures of the photodetection circuit according to an embodiment of this application.

In some embodiments, as shown in FIG. 12A, the photodetection circuit 10 further includes an optical splitter 50. The optical splitter 50 is configured to split a received optical signal (an optical-carrier radio frequency signal) into the first optical signal and the second optical signal.

In this case, as shown in FIG. 12A, the photodetection circuit 10 includes one optical input end I whose input port is an optical port, and the optical splitter 50 implements power splitting of the optical signal and outputs the first optical signal and the second optical signal. Compared with that two independent optical input ends are required, a quantity of input interfaces of the photodetection circuit 10 can be reduced, and power and efficiency can be improved without increasing costs and complexity of the photodetection circuit 10.

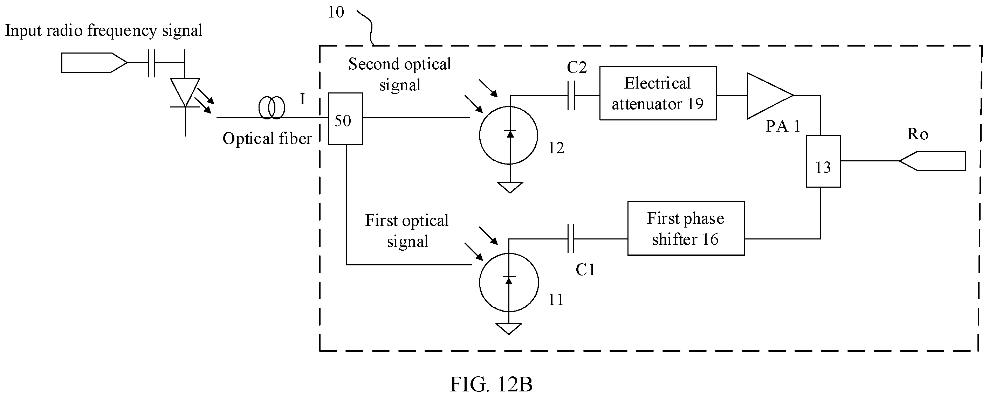

In some embodiments, as shown in FIG. 12B, the optical splitter 50 is an equal-ratio power splitter.

The input radio frequency signal is converted into an optical signal by a photodiode, the optical signal is transmitted to the optical splitter 50 in the photodetection circuit 10 through an optical fiber, and the optical splitter 50 splits the received signal into the first optical signal and the second optical signal in a ratio of 1:1.

In this way, all optical splitters 50 that can implement equal-ratio power splitting in related technologies are applicable to embodiments of this application, and the technology of the optical splitter 50 is mature and easy to implement. In this case, for example, the photodetection circuit 10 further includes the foregoing power adjustment structure (for example, an electrical attenuator 19 in FIG. 12B), configured to implement that the first branch and the second branch output equal-amplitude in-phase radio frequency signals.

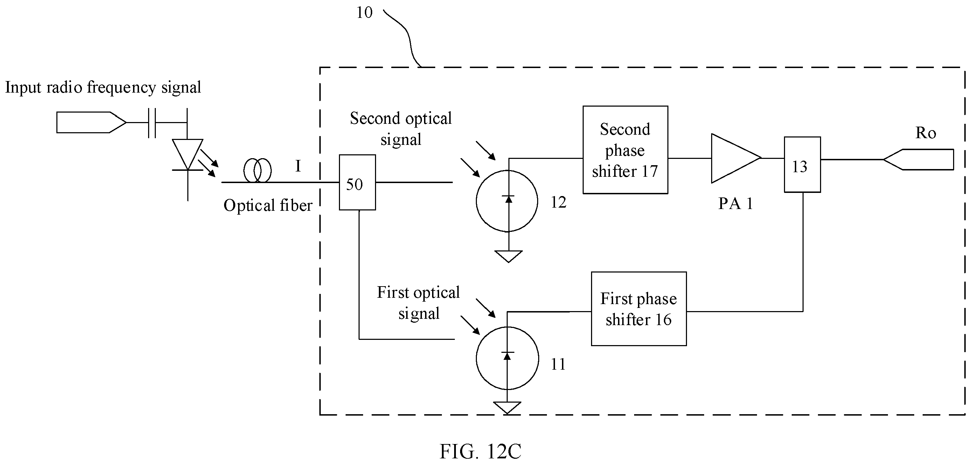

In some other embodiments, as shown in FIG. 12C, the optical splitter 50 is an unequal-ratio power splitter.

The optical splitter 50 splits the received optical signal into the first optical signal and the second optical signal in an unequal ratio. For example, a ratio of the first optical signal is greater than a ratio of the second optical signal.

In this way, the photodetection circuit 10 may not need to include the foregoing power adjustment structure. Provided that the photodetection circuit 10 includes the phase adjustment structure (for example, a first phase shifter 16 and a second phase shifter 17 in FIG. 12C), the first branch and the second branch can output equal-amplitude in-phase radio frequency signals, thereby simplifying the structure of the photodetection circuit 10.

Regardless of whether the optical splitter 50 is an equal-ratio power splitter or an unequal-ratio power splitter, after an allocation ratio of the optical splitter 50 is determined, the gate voltage of the first power amplifier PA 1 may be adjusted, so that the first power amplifier PA 1 is turned on when power of the optical-carrier radio frequency signal received by the optical splitter 50 is greater than or equal to average power. When power of the optical-carrier radio frequency signal received by the optical splitter 50 is less than average power, the first power amplifier PA 1 is turned off.

It should be noted that, when the power adjustment structure in the photodetection circuit 10 is an optical attenuator 18, and the phase adjustment structure in the photodetection circuit 10 is a first optical delayer 14 or a second optical delayer 15, one or more of the optical attenuator 18, the first optical delayer 14, and the second optical delayer 15 may be integrated into the optical splitter 50.

With regard to structures of the first photodetector 11 and the second photodetector 12, in some embodiments, the first photodetector 11 and the second photodetector 12 are high-power photodiodes (HPD).

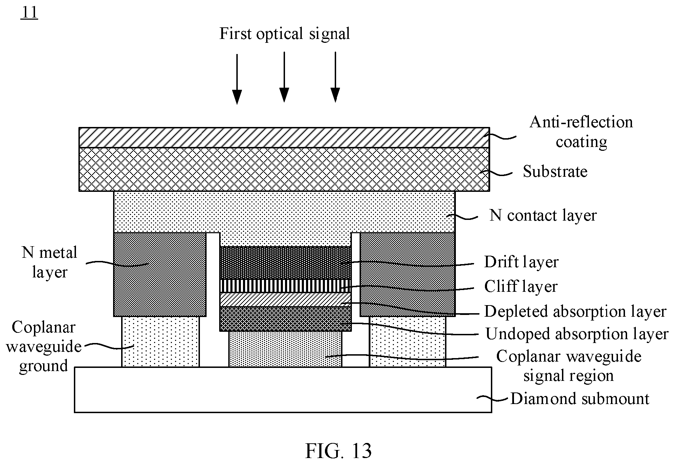

FIG. 13 is a diagram of a structure of the first photodetector according to an embodiment of this application.

For example, as shown in FIG. 13, the first photodetector 11 includes an anti-reflection coating (Anti-reflection Coating, ARC), a substrate, an N contact layer (N contact layer), a drift layer (drift layer), a cliff layer (cliff layer), a depleted absorption layer (depleted absorption layer), an undoped absorption layer (undepleted absorption layer), an N metal (n metal) layer, a coplanar waveguide signal (coplanar waveguide Signal) region, a coplanar waveguide ground (coplanar waveguide GND), and a diamond submount (diamond submount). Certainly, the structure of the first photodetector 11 shown in FIG. 13 is merely an example, and is not limited.

The first optical signal is emitted into the first photodetector 11 from a side on which the anti-reflection coating is located, optical-electro conversion is implemented inside the first photodetector 11 by using internal photoelectric effect of a semiconductor material, and electronhole pairs are generated through absorption of photons, to generate a photocurrent in an external circuit. When incident light is an optical-carrier radio frequency signal, the output photocurrent includes a direct current component and a radio frequency component. The radio frequency component forms the first radio frequency signal after being output by the coplanar waveguide signal region, the coplanar waveguide signal region is coupled to the impedance modulation network 13, and the coplanar waveguide ground is coupled to a reference ground voltage end.

In some embodiments, the structure of the second photodetector 12 is the same as the structure of the first photodetector 11. Details are not described herein again.

An embodiment of this application further provides a signal processing method. The signal processing method may be performed by the foregoing photodetection circuit 10. The signal processing method includes the following steps.

A first photodetector 11 receives a first optical signal and performs optical-electro conversion on the first optical signal to generate a first radio frequency signal. A second photodetector 12 receives a second optical signal and performs optical-electro conversion on the second optical signal to generate a second radio frequency signal.

The first optical signal and the second optical signal are two optical signals obtained by processing an input radio frequency signal. With reference to the foregoing descriptions, the first optical signal and the second optical signal may be optical signals that have been split before entering the photodetection circuit 10, or may be signals that are formed after being processed after entering the photodetection circuit 10. In this case, the signal processing method further includes: receiving an optical signal, and processing (for example, performing power splitting processing on) the optical signal to generate the first optical signal and the second optical signal. This step may be performed, for example, by the foregoing optical splitter 50.

A first power amplifier PA 1 is turned on or turned off under control of the second radio frequency signal, and the second radio frequency signal is amplified when the first power amplifier PA 1 is turned on.

For example, the first power amplifier PA 1 is turned off when the second radio frequency signal is less than a specified value. In this case, the amplified second radio frequency signal output by the first power amplifier PA 1 may be understood as 0. The first power amplifier PA 1 is turned on when the second radio frequency signal is greater than or equal to a specified value.

An impedance modulation network 13 performs output impedance conversion on the first photodetector 11 and the second photodetector 12, and combines the first radio frequency signal and the amplified second radio frequency signal for output.

The impedance modulation network 13 performs output impedance conversion on the first photodetector 11 and the second photodetector 12 based on power of the first radio frequency signal and power of the second radio frequency signal. For a specific process, refer to the foregoing descriptions about the impedance modulation network 13. Details are not described herein again.

In some embodiments, the signal processing method further includes: performing phase modulation on the first optical signal. For example, the foregoing first optical delayer 14 is used to perform phase modulation on the first optical signal.

In some embodiments, the signal processing method further includes: performing phase modulation on the second optical signal. For example, the foregoing second optical delayer 15 is used to perform phase modulation on the second optical signal.

In some embodiments, the signal processing method further includes: performing amplitude modulation on the second optical signal. For example, the foregoing optical attenuator 18 is used to perform amplitude modulation on the second optical signal.

In some embodiments, the signal processing method further includes: performing phase modulation on the first radio frequency signal. For example, the foregoing first phase shifter 16 is used to perform phase modulation on the first radio frequency signal.

In some embodiments, the signal processing method further includes: performing phase modulation on the second radio frequency signal. For example, the foregoing second phase shifter 17 is used to perform phase modulation on the second radio frequency signal.

In some embodiments, the signal processing method further includes: performing amplitude modulation on the second radio frequency signal. For example, the foregoing electrical attenuator 19 is used to perform amplitude modulation on the second radio frequency signal.

In this application, without a logical contradiction, mutual reference can be made between embodiments. For example, mutual reference can be made between methods and/or terms in method embodiments, mutual reference can be made between functions and/or terms in apparatus embodiments, and mutual reference can be made between functions and/or terms in the apparatus embodiments and the method embodiments.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A photodetection circuit, comprising:
an optical input end, configured to input an optical signal, wherein the optical signal comprises a first optical signal and a second optical signal;
a radio frequency output end;
a first photodetector, configured to: receive the first optical signal and output a first radio frequency signal;
a second photodetector, configured to: receive the second optical signal and output a second radio frequency signal;
an impedance modulation network, configured to: perform output impedance conversion on the first photodetector and the second photodetector, and couple an output end of the first photodetector and an output end of the second photodetector to the radio frequency output end; and
a first power amplifier, coupled between the second photodetector and the impedance modulation network, and configured to: amplify the second radio frequency signal and control connection and disconnection between the second photodetector and the impedance modulation network.

2. The photodetection circuit according to claim 1, wherein the first power amplifier is specifically configured to: when the second radio frequency signal is less than a specified value, control the second photodetector to be disconnected from the impedance modulation network; when the second radio frequency signal is greater than or equal to a specified value, control the second photodetector to be connected to the impedance modulation network.

3. The photodetection circuit according to claim 1 or 2, further comprising an optical attenuator, wherein the second optical signal is attenuated by the optical attenuator and then transmitted to the second photodetector.

4. The photodetection circuit according to any one of claims 1 to 3, further comprising an electrical attenuator, wherein the electrical attenuator is coupled between the second photodetector and the first power amplifier.

5. The photodetection circuit according to any one of claims 1 to 4, wherein
the photodetection circuit further comprises a first optical delayer, and the first optical signal is phase-shifted by the first optical delayer and then transmitted to the first photodetector; and/or
the photodetection circuit further comprises a second optical delayer, and the second optical signal is phase-shifted by the second optical delayer and then transmitted to the second photodetector.

6. The photodetection circuit according to any one of claims 1 to 4, wherein the photodetection circuit further comprises a first phase shifter, and the first phase shifter is coupled between the first photodetector and the impedance modulation network; and/or
the photodetection circuit further comprises a second phase shifter, and the second phase shifter is coupled between the second photodetector and the first power amplifier.

7. The photodetection circuit according to any one of claims 1 to 6, further comprising a third photodetector and a second power amplifier, wherein
the third photodetector is configured to: receive a third optical signal and output a third radio frequency signal; and
the second power amplifier is coupled between the third photodetector and the impedance modulation network, and is configured to control connection and disconnection between the third photodetector and the impedance modulation network.

8. The photodetection circuit according to claim 7, wherein a turn-on voltage of the first power amplifier is not equal to a turn-on voltage of the second power amplifier.

9. The photodetection circuit according to any one of claims 1 to 8, wherein power of the first optical signal is greater than or equal to power of the second optical signal.

10. The photodetection circuit according to any one of claims 1 to 9, further comprising an optical splitter, wherein the optical splitter is configured to: receive the optical signal and split the optical signal into the first optical signal and the second optical signal.

11. The photodetection circuit according to any one of claims 1 to 10, further comprising an impedance matching network, wherein the impedance matching network is coupled between the second photodetector and the first power amplifier.

12. The photodetection circuit according to any one of claims 1 to 11, further comprising a first capacitor and a second capacitor, wherein
the first capacitor is coupled between the first photodetector and the impedance modulation network, and the second capacitor is coupled between the second photodetector and the first power amplifier.

13. A photoelectric conversion module, comprising a photodetection circuit and an electro-optical conversion circuit, wherein the photodetector is configured to convert a received optical signal into an electrical signal, the electro-optical conversion circuit is configured to convert a received electrical signal into an optical signal, and the photodetection circuit comprises the photodetection circuit according to any one of claims 1 to 12.

14. A photoelectric conversion chip, comprising a photodetection circuit and an electro-optical conversion circuit, wherein the photodetector is configured to convert a received optical signal into an electrical signal, the electro-optical conversion circuit is configured to convert a received electrical signal into an optical signal, and the photodetection circuit comprises the photodetection circuit according to any one of claims 1 to 12.

15. A communication apparatus, comprising a photoelectric conversion module and an antenna element, wherein the photoelectric conversion module is coupled to the antenna element, and the photoelectric conversion module comprises the photoelectric conversion module according to claim 13 or the photoelectric conversion chip according to claim 14.

16. A wireless communication system, comprising a baseband processing unit, a communication apparatus, and an optical fiber, wherein the baseband processing unit and the communication apparatus are connected to each other through the optical fiber, and the communication apparatus comprises the communication apparatus according to claim 15.

17. A signal processing method, comprising:
receiving, by a first photodetector, a first optical signal and performing optical-electro conversion on the first optical signal to generate a first radio frequency signal, and receiving, by a second photodetector, a second optical signal and performing optical-electro conversion on the second optical signal to generate a second radio frequency signal;
turning on or turning off a first power amplifier under control of the second radio frequency signal, and amplifying the second radio frequency signal when the first power amplifier is turned on; and
performing, by an impedance modulation network, output impedance conversion on the first photodetector and the second photodetector, and combining the first radio frequency signal and the amplified second radio frequency signal for output.

18. The signal processing method according to claim 17, wherein the first power amplifier is turned off when the second radio frequency signal is less than a specified value, or the first power amplifier is turned on when the second radio frequency signal is greater than or equal to a specified value.

19. The signal processing method according to claim 17 or 18, further comprising:
performing phase modulation on the first optical signal; and/or
performing phase modulation and/or amplitude modulation on the second optical signal; and/or
performing phase modulation on the first radio frequency signal; and/or
performing phase modulation and/or amplitude modulation on the second radio frequency signal.

20. The signal processing method according to any one of claims 17 to 19, further comprising:
inputting an optical signal, and processing the optical signal to generate the first optical signal and the second optical signal.
